# EUROPÄISCHE PATENTANMELDUNG

(11) **EP 4 764 993 A1**
(43) Veröffentlichungstag der Anmeldung: **24.06.2026**
(21) Anmeldenummer: 25225012.1
(22) Anmeldetag: 18.12.2025
(51) Int. Cl.: G06Q 20/04, G06Q 20/20

(54) **ERSTELLUNGSVERFAHREN FÜR EIN ERSTELLEN EINES DIGITALEN QUITTUNGSCODES FÜR EINEN VERKAUFSVORGANG ZWISCHEN EINEM VERKÄUFER MIT EINER VERKAUFSVORRICHTUNG UND EINEM KÄUFER MIT EINEM MOBILGERÄT**

(30) Priorität: 20.12.2024 DE 102024139294
(71) Anmelder: HESS Cash Systems GmbH, 71106 Magstadt (DE)
(72) Erfinder: SCHARSIG, Dariusz, 49356 Diepholz (DE)
(74) Vertreter: Mathys & Squire

(57) **Zusammenfassung**

Die vorliegende Erfindung betrifft ein Erstellungsverfahren für ein Erstellen eines digitalen Quittungscodes (QC) für einen Verkaufsvorgang zwischen einem Verkäufer (V) mit einer Verkaufsvorrichtung (10) und einem Käufer (K) mit einem Mobilgerät (200), aufweisend die folgenden Schritte:
- Erfassen von wenigstens einer Verkaufsinformation (VI) des Verkaufsvorgangs,
- Erzeugen wenigstens einer Quittungsinformation (Ql) auf Basis der erfassten wenigstens einen Verkaufsinformation (VI),
- Erzeugen eines digitalen Quittungscodes (QC), aufweisend einen Informationscode (IC) mit der wenigstens einen Quittungsinformation (QI) und einen Adresscode (AC) mit einem Adresslink (AL) zum Aufrufen einer Netzadresse (NA) in einem Datennetzwerk (300),
- Ausgeben des erzeugten digitalen Quittungscodes (QC) an das Mobilgerät (200) des Käufers (K).

## Beschreibung

Die vorliegende Erfindung betrifft ein Erstellungsverfahren für ein Erstellen eines digitalen Quittungscodes für einen Verkaufsvorgang zwischen einem Verkäufer mit einer Verkaufsvorrichtung und einem Käufer mit einem Mobilgerät, ein Erzeugungsverfahren für ein Erzeugen einer digitalen Quittung aus einem digitalen Quittungscode, ein Computerprogrammprodukt zur Durchführung eines Erstellungsverfahrens und/oder eines Erzeugungsverfahrens, eine Verkaufsvorrichtung zur Durchführung eines Erstellungsverfahrens und ein Erzeugungssystem für eine Durchführung eines Erzeugungsverfahrens.

Es ist grundsätzlich bekannt, dass bei Verkaufsvorgängen Quittungen für den Verkauf eines Verkaufsobjekts ausgestellt werden. Wird beispielsweise ein Verkaufsobjekt von einem Verkäufer physisch an einen Käufer übergeben und der Verkaufsvorgang durchgeführt, so sind je nach geographischen und/oder rechtlichen Gegebenheiten bestimmte Informationen zu diesem Verkauf in einer Quittung festzuhalten. Üblicherweise handelt es sich dabei um steuerliche Informationen, Informationen über das Verkaufsobjekt selbst, Ort und Datum des Verkaufs sowie den Verkaufspreis. Solche Quittungen werden seit langer Zeit entweder physisch in Papierform ausgestellt oder durch entsprechende Registrierkassensysteme ebenfalls in Papierform ausgedruckt.

Es ist grundsätzlich auch bereits bekannt, dass Quittungen in digitaler Weise, also ohne einen Ausdruckvorgang, erstellt und übergeben werden. Für das digitale Erstellen muss jedoch ein sogenanntes Rendering-Verfahrens ausgeführt werden, also aus den Verkaufsinformationen, welche als Quittungsinformation in die digitale Quittung übergeben werden, ein entsprechendes digitales Dokument erstellt werden. Um dies lokal in einer Verkaufsvorrichtung durchzuführen, ist ein entsprechend hoher Rechenaufwand und/oder hoher Zeitaufwand notwendig, welcher insbesondere bei vielen Verkaufsvorgängen nacheinander unerwünscht ist und die Dauer des Verkaufsvorgangs unnötig verlängert. Die bisherigen Lösungen zielen daher darauf ab, diesen Erstellungsvorgang für das Dokument der digitalen Quittung auf einem Server in einem Datennetzwerk durchzuführen, welcher die entsprechende Rechenkapazität aufweist. Um dies zu gewährleisten, ist eine Netzanbindung der Verkaufsvorrichtung zwingend erforderlich, welches zum einen mit einer erhöhten Komplexität dieser Verkaufsvorrichtung einhergeht. So ist ein Netzwerkanschluss zu dem Datennetzwerk entweder kabelgebunden oder kabellos für die Verkaufsvorrichtung notwendig. Zusätzlich stellt diese Anbindung an einen zentralen Server für die Verkaufsvorrichtung neben der erhöhten Komplexität auch eine Sicherheitsproblematik dar. Insbesondere bei Verkaufsvorgängen, welche sicherheitsrelevant sind, beispielsweise bei der Übergabe von Geld an einem Geldautomaten, welches auch als Verkaufsvorgang verstanden werden kann, ist eine Anbindung solcher Geldautomaten an externe Netzwerke häufig unerwünscht oder sogar gesetzlich verboten. In einem solchen Fall ist also die bisherige Lösung mit der Auslagerung der Erstellungskomplexität an einem Netzwerkserver nicht möglich.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise eine lokale und von einem Netzwerk unabhängige Erzeugung einer digitalen Quittung zur Verfügung zu stellen und den Erzeugungsaufwand dafür zu minimieren.

Die voranstehende Aufgabe wird gelöst durch ein Erstellungsverfahren mit den Merkmalen des Anspruchs 1, ein Erzeugungsverfahren mit den Merkmalen des Anspruchs 8, ein Computerprogrammprodukt mit den Merkmalen des Anspruchs 14, eine Verkaufsvorrichtung mit den Merkmalen des Anspruchs 15 sowie ein Erzeugungssystem mit den Merkmalen des Anspruchs 16. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Erstellungsverfahren beschrieben sind, selbstverständlich auch im Zusammenhang mit dem erfindungsgemäßen Erzeugungsverfahren, dem erfindungsgemäßen Computerprogrammprodukt, der erfindungsgemäßen Verkaufsvorrichtung sowie dem erfindungsgemäßen Erzeugungssystem und jeweils umgekehrt, sodass bezüglich der Offenbarung zu den einzelnen Erfindungsaspekten stets wechselseitig Bezug genommen wird beziehungsweise werden kann.

Erfindungsgemäß wird ein Erstellungsverfahren vorgeschlagen für ein Erstellen eines digitalen Quittungscodes für einen Verkaufsvorgang zwischen einem Verkäufer mit einer Verkaufsvorrichtung und einem Käufer mit einem Mobilgerät. Ein solches Erstellungsverfahren weist die folgenden Schritte auf:
- Erfassen von wenigstens einer Verkaufsinformation des Verkaufsvorgangs,
- Erzeugen wenigstens einer Quittungsinformation auf Basis der erfassten wenigstens einen Verkaufsinformation,
- Erzeugen eines digitalen Quittungscodes, aufweisend einen Informationscode mit der wenigstens einen Quittungsinformation und einen Adresscode mit einem Adresslink zum Aufrufen einer Netzadresse in einem Datennetzwerk,
- Ausgeben des erzeugten digitalen Quittungscodes an das Mobilgerät des Käufers.

Ein erfindungsgemäßes Erstellungsverfahren basiert auf der grundliegenden Idee eine digitale Quittung lokal in einer Verkaufsvorrichtung zu erzeugen. Eine Verkaufsvorrichtung dient dabei der Abhandlung einzelner Verkaufsschritte bei der Übergabe eines Verkaufsobjekts vom Verkäufer an den Käufer. Dabei kann unter einem Verkaufsvorgang ein klassischer Verkauf eines Produktes verstanden werden. Jedoch sind auch andere Verkaufsobjekte, beispielsweise das Ausgeben von Geld aus einem Geldautomaten, grundsätzlich im Rahmen der vorliegenden Erfindung als Verkaufsvorgang zu verstehen. Der Verkaufsvorgang kann dabei eine Bezahlung in unterschiedlichster Weise aufweisen. So kann der Käufer sich mit einer entsprechenden Kreditkarte, EC-Karte oder einer anderweitigen digitalen Zahlungsmöglichkeit, beispielsweise über ein Mobilgerät, identifizieren und den Zahlungsvorgang durchführen. Auch die Bezahlung mit Bargeld und eine entsprechende Eingabe in die Verkaufsvorrichtung ist denkbar. Die Verkaufsvorrichtung selbst kann direkt Erfassungsmöglichkeiten aufweisen, um entsprechend Verkaufsinformationen, also Informationen über das Verkaufsobjekt, den Verkäufer, den Käufer und/oder den Zahlungsvorgang zu erfassen und entsprechend für das Erstellungsverfahren zur Verfügung zu stellen.

Der erfindungsgemäße Kerngedanke beruht nun darauf, dass ähnlich den bekannten Registrierkassensystemen Verkaufsinformationen über den Verkaufsvorgang automatisch oder auch durch manuelle Eingabe erfasst werden. Diese korrelieren dabei vorzugsweise bereits mit den gesetzlichen Anforderungen für Informationen, welche als Quittungsinformation Teil der später zu erzeugenden digitalen Quittung sein müssen. Insbesondere handelt es sich hier üblicherweise um den Verkaufspreis, Informationen zum Verkaufsobjekt, die anfallende Steuer für das Verkaufsobjekt und Zahlungsinformationen, das Datum, den Ort des Verkaufs wie auch häufig eine fortlaufende Nummer des Verkaufsvorgangs. Je nach geographischem Einsatzgebiet können dabei die Anforderungen an den Inhalt der Verkaufsinformationen abweichen, wobei ein erfindungsgemäßes Erstellungsverfahren sich entsprechend geografisch an die rechtlichen Gegebenheiten in einfacher Weise flexibel anpassen lässt.

Auf Basis der Verkaufsinformationen werden nun ein oder mehrere Quittungsinformationen erzeugt, welche entsprechend diese Informationen so aufbereiten, dass auf dieser Basis die digitale Quittung erstellt werden kann. Insbesondere handelt es sich dabei um eine entsprechende Anforderung, sodass beispielsweise aus dem erfassten Verkaufspreis als Verkaufsinformation die zugehörige Mehrwertsteuer als zusätzliche Quittungsinformation berechnet werden kann. Auch das Erzeugen einer eindeutigen Belegnummer für die digitale Quittung kann als Teil dieses Erzeugungsschrittes zur Verfügung gestellt werden. Dieser Erzeugungsschritt kann also als Auswahl und/oder Bearbeitung der Verkaufsinformationen ausgebildet sein.

Der Kerngedanke des erfindungsgemäßen Erstellungsverfahrens liegt nun darin, dass auf dieser Basis nicht in der bisher bekannten Weise direkt die digitale Quittung zur Ausgabe erzeugt oder eine direkte Kommunikation mit einem Datennetzwerk stattfindet. Vielmehr erfolgt lokal und frei von jeder Anbindung an ein Datennetzwerk nun ein Erzeugungsschritt, welcher einen digitalen Quittungscode erstellt. Dieser digitale Quittungscode ist noch nicht eine lesbare digitale Quittung, wie sie der Nutzer später erst im Erzeugungsverfahren erhält. Vielmehr ist der digitale Quittungscode eine Information, welche an das Mobilgerät ausgegeben werden soll, und kann auch als Maschinenquittung bezeichnet werden. Diese Information hat im Wesentlichen zwei Hauptbestandteile. So weist der digitale Quittungscode einen Informationscode als ersten Hauptbestandteil und einen Adresscode als zweiten Hauptbestandteil aus. Der Informationscode kann auch als "Payload" bezeichnet werden, da dieser Teil des Quittungscodes die wenigstens eine erzeugte Quittungsinformation aufweist. Hier sind nun in verschlüsselter oder unverschlüsselter Weise die nötigen Quittungsinformationen vorhanden, welche für die tatsächliche Erstellung der digitalen Quittung später im Erzeugungsverfahren benötigt werden. Zusätzlich ist im Adresscode ein Adresslink gespeichert, welcher es ermöglicht mit einem Mobilgerät oder einem anderen, im Datennetzwerk befindlichen Gerät, einen Server zu erreichen, welcher in einem später beschriebenen Erzeugungssystem in der Lage ist, aus dem Informationscode nun die gewünschte digitale Quittung zu erzeugen. Dieser Adresslink dient also dazu, eine eineindeutigere Referenzierung zu gewährleisten, um zu einem späteren Zeitpunkt das Erzeugungsverfahren spezifisch mit den Quittungsinformationen des Informationscodes des digitalen Quittungscodes durchzuführen und auf diese Weise aus dem Quittungscode die gewünschte digitale Quittung für den Käufer zur Verfügung zu stellen. Im abschließenden Schritt erfolgt das Ausgeben dieses erzeugten digitalen Quittungscodes an das Mobilgerät des Käufers.

Nachfolgend wird kurz erläutert, wie anhand eines Beispiels eines Verkaufsvorgangs ein solches Erstellungsverfahren stattfinden kann. In der bekannten Weise kann ein Verkaufsobjekt von einem Verkäufer an einen Käufer übergeben werden. Im Gegenzug zahlt der Käufer den Preis für das Verkaufsobjekt, beispielsweise unter Nutzung einer Kreditkarte. Die Verkaufsvorrichtung, beispielsweise eine digitale Registrierkasse, welche als Anwendung auf einem Tablet ausgeführt werden kann, ist nun in der Lage lokal die Verkaufsinformationen zu erfassen, welche zum Beispiel die Produktart des Verkaufsobjekts und der dazugehörige Kaufpreis sind. Auf Basis dieser Verkaufsinformationen wird nun zusätzlich unter Anwendung des aktuellen Datums und des aktuellen Ortes eine Mehrzahl von Quittungsinformationen erzeugt. Diese können beispielsweise den Kaufpreis, die Produktart, die anwendbare Mehrwertsteuer und insbesondere ein eineindeutige Belegnummer beinhalten.

Diese Quittungsinformationen werden nun codiert in dem Informationscode und als sogenannte "Payload" in den digitalen Quittungscode bei dessen Erzeugung integriert. Zusätzlich wird im Adresscode ein Adresslink generiert, welcher es erlaubt eine direkte Adressierung über ein Datennetzwerk zu einem Server herzustellen, welcher zu einem späteren Zeitpunkt in der Lage sein wird, aus dem Informationscode die gewünschte digitale Quittung zu erzeugen.

Das Ausgeben dieses erzeugten digitalen Quittungscodes kann in unterschiedlichster Weise erfolgen. Beispielsweise kann ein einfacher 2D-Barcode erzeugt werden, welcher entsprechend für die Ausgabe visuell vom Mobilgerät des Nutzers mittels einer Kameravorrichtung abgescannt werden kann. Auch andere digitale Ausgaben sind jedoch grundsätzlich denkbar. So ist ein drahtloses oder auch kabelgebundenes Übersenden an das Mobilgerät denkbar, wie auch grundsätzlich sogar ein Ausdrucken dieses digitalen Quittungscodes. Bevorzugt ist jedoch eine rein digitale Ausgabe und damit eine rein digitale Übergabe entweder über ein Kamerasystem oder andere Datenschnittstellen zwischen Verkaufsvorrichtung und dem Mobilgerät, beispielsweise NFC oder Bluetooth.

Im Abschluss eines erfindungsgemäßen Erstellungsverfahrens wurde nun nicht nur der digitale Quittungscode erzeugt, sondern auch an das Mobilgerät des Käufers übergeben. Dieses gesamte Verfahren ist frei von jedem Zugang zu einem Datennetzwerk, sodass die Verkaufsvorrichtung, in welcher das Erstellungsverfahren abläuft, komplett offline und damit ohne jeden Zugang zu einem Datennetzwerk ausgebildet werden kann. Gleichzeitig ist dieses Erstellungsverfahren frei von dem rechenintensiven Erzeugungsschritt der Erzeugung der digitalen Quittung, sodass weder Algorithmen aus den Quittungsinformationen die tatsächliche digitale Quittung erstellen müssen noch Rendering-Schritte für das Erstellen, beispielsweise eines Textdokumentes, insbesondere eines PDF-Dokumentes, beim Durchführen des Verkaufsvorgangs abgewartet werden müssen. Mit anderen Worten kann das Erstellungsverfahren nun offline und schnell durchgeführt werden und trotzdem eine rein digitale Quittungsmöglichkeit geschaffen werden.

Das erfindungsgemäße Erstellungsverfahren lässt sich dahingehend weiterbilden, dass als Verkaufsinformation wenigstens eine der vorliegenden erfasst wird:
- Kaufpreis,
- anwendbare Steuer,
- Verkaufsort,
- Verkaufszeit,
- Verkaufsdatum,
- Käuferidentifikation,
- Verkäuferidentifikation,
- Zahlungsinformation,
- Nummerierung des Verkaufsvorgangs.

Bei der voranstehenden Aufzählung handelt es sich um eine nicht abschließende Liste. Insbesondere werden so viele Verkaufsinformationen erfasst, wie möglich. Je nach Verkaufsvorrichtung sind dabei unterschiedlichste Dateneingabemöglichkeiten vorhanden. So können zum Beispiel Scannervorrichtungen über einen Barcode die Produktart und einen hinterlegten Preis aus einer Datenbank als Verkaufsinformationen erhalten. Verkaufsort und Verkaufszeit können entweder voreingegeben werden oder über entsprechende Timer und/oder sogar GPS-Sensoren erfasst werden. Das Verkaufsdatum wird entsprechend aus einem hinterlegten digitalen Kalender erfasst. Zahlungsinformationen und Käuferinformationen können zum Beispiel über eine digitale Zahlung, zum Beispiel über Kreditkarteninformationen, gespeichert werden. Grundsätzlich ist es unerheblich aus welcher Quelle die Verkaufsinformationen erfasst werden, um sie anschließend bei der Erzeugung der Quittungsinformationen zu verwenden. So ist auch eine wenigstens teilweise manuelle Eingabe der Verkaufsinformationen im Rahmen der vorliegenden Erfindung denkbar.

Es kann weiter von Vorteil sein, wenn bei einem erfindungsgemäßen Erstellungsverfahren der digitale Quittungscode wenigstens eine der folgenden Formen aufweist:
- visueller Code, insbesondere QR-Code,
- digitale Codeinformation.

Auch bei der voranstehenden Aufzählung handelt es sich um eine nicht abschließende Liste. Das Erstellungsverfahren kann dabei insbesondere den digitalen Quittungscode auch in mehreren unterschiedlichen Weisen zur Verfügung stellen und ausgeben, sodass je nach tatsächlicher Ausgestaltung des Mobilgeräts und/oder Wunsch des Käufers die entsprechende Ausgabe erfolgen kann. So ist eine Ausgabe über drahtlose Kommunikationswege wie Bluetooth oder NFC genauso möglich wie das visuelle Abscannen eines QR-Codes mit der Kameravorrichtung des Mobilgerätes. Auch eine Kombination dieser Übergabe ist denkbar, sodass beispielsweise ein Teil des digitalen Quittungscodes visuell und ein anderer Teil des digitalen Quittungscodes über eine drahtlose Nahfeldverbindung übergeben werden kann.

Ein weiterer Vorteil ist es ebenfalls, wenn bei einem erfindungsgemäßen Erstellungsverfahren der Adresscode des digitalen Quittungscodes den Informationscode enthält. Mit anderen Worten wird der Adresscode nun um die "Payload" ergänzt, sodass der Adresscode als Adresslink spezifisch für den digitalen Quittungscode ist, da den Informationscode enthält. Mit anderen Worten kann auf diese Weise sichergestellt werden, dass beim Aufrufen des Adresslinks über das Mobilgerät direkt auch die "Payload" und damit die Daten der Quittungsinformationen übertragen werden. Somit wird der Schritt der späteren Erzeugung der digitalen Quittung noch einfacher, da kein zweiter Schritt einer Übertragung des Informationscodes mehr notwendig ist, sondern dieser Informationscode als Bestandteil des Adresscodes direkt beim Aufrufen des Servers mit übermittelt wird. Dies ist insbesondere dann sinnvoll, wenn es sich um datenarme Quittungsinformationen handelt, welche insbesondere mit wenig Datenvolumen einfach im Informationscode codiert werden können.

Darüber hinaus bringt es Vorteile mit sich, wenn bei einem erfindungsgemäßen Erstellungsverfahren der erzeugte Quittungscode lokal in einer Speichervorrichtung der Verkaufsvorrichtung gespeichert wird, wobei das Speichern insbesondere zeitlich vor der Ausgabe an das Mobilgerätes erfolgt. Die Speichervorrichtung erlaubt es nun ein Nachhalten des erzeugten Quittungscodes durchzuführen. Insbesondere für steuerliche Erfordernisse auf Seiten des Verkäufers kann es notwendig sein, die digitalen Quittungscodes so lange zu speichern, bis eine steuerliche Speicherpflicht erloschen ist. Die Speicherung dieser Quittungscodes führt nun dazu, dass ähnlich einem Belegbuch, welches früher manuell geführt wurde, diese Quittungscode digital in der Verkaufsvorrichtung gespeichert werden. Dies kann beliebig lange erfolgen oder aber durch ein regelmäßiges Auslesen von einer Steuersoftware eine steuerliche Nacharbeit der erzeugten digitalen Quittungscodes erlauben. Die Speicherung vor der Ausgabe an das Mobilgerät erhöht die Sicherheit und damit insbesondere die Fälschungsresitenz, da der erzeugte Quittungscode erst gespeichert und dann ausgegeben wird. Erfolgt eine nachträgliche Manipulation des Quittungscodes, beispielsweise durch den Käufer auf seinem Mobilgerät, so kann diese Manipulation nachgewiesen werden, durch eine entstehende Diskrepanz der enthaltenen Daten zu den vorab bereits gespeicherten Informationen des Quittungscodes in der Speichervorrichtung der Verkaufsvorrichtung.

Weitere Vorteile bringt es mit sich, wenn bei dem Erstellungsverfahren gemäß dem voranstehenden Absatz die Ausgabe des erzeugten digitalen Quittungscodes nach dem Speichern durch Auslesen aus der Speichervorrichtung erfolgt. Dies erhöht die Fälschungssicherheit noch weiter. So wird sichergestellt, dass ausschließlich der bereits gespeicherte Quittungscode ausgegeben wird. Jegliche Form der nachträglichen Manipulation ist nun eineindeutig nachweisbar, da diese nachträgliche Manipulation durch einen Unterschied zwischen dem vorab bereits gespeicherten und entsprechend erst nachfolgend ausgegebenen Quittungscodes zu erkennen ist.

Von Vorteil ist es ebenfalls, wenn bei einem erfindungsgemäßen Erstellungsverfahren der Informationscode die Quittungsinformation in einer verschlüsselten Form aufweist. Diese Verschlüsselung ist insbesondere so gewählt, dass eine Entschlüsselung auf dem Mobilgerät des Nutzers nicht möglich ist. Dies erlaubt es, die Ausgabe so durchzuführen, dass eine Fälschungssicherheit weiter erhöht wird, da das Mobilgerät keinen Zugang zu der verschlüsselten Quittungsinformation erhält. Die Entschlüsselung erfolgt erst später im Erzeugungsverfahren auf Seiten des Servers über das Datennetzwerk, sodass entsprechend die Manipulationssicherheit erhöht gegeben ist.

Ein weiterer Gegenstand der vorliegenden Erfindung ist ein Erzeugungsverfahren für ein Erzeugen einer digitalen Quittung aus einem digitalen Quittungscode, welcher insbesondere mittels eines Erstellungsverfahrens der vorliegenden Erfindung erstellt worden ist. Das Erzeugungsverfahren dient ebenfalls im Nachgang dem Verkaufsvorgang zwischen einem Verkäufer mit einer Verkaufsvorrichtung und einem Käufer mit einem Mobilgerät und weist die folgenden Schritte auf:
- Erfassen des digitalen Quittungscodes mit dem Mobilgerät des Käufers,
- Ausbilden einer Datenverbindung zwischen dem Mobilgerät und einem Server in einem Datennetzwerk über ein Kommunikationsnetzwerk, mit welchem das Mobilgerät verbunden ist, unter Nutzung des Adresscodes des digitalen Quittungscodes,
- Übermitteln des Informationscodes des digitalen Quittungscodes über die ausgebildete Datenverbindung,
- Erzeugen der digitalen Quittung mittels eines Erzeugungsalgorithmus auf dem Server auf Basis der Quittungsinformationen des Informationscodes,
- Übermitteln der erzeugten digitalen Quittung vom Server zu dem Mobilgerät über die ausgebildete Datenverbindung.

Das erfindungsgemäße Erzeugungsverfahren schließt zeitlich direkt oder zeitlich versetzt an das Erstellungsverfahren an. Es kann direkt damit im Anschluss an das Erstellungsverfahren über das Mobilgerät die entsprechende Datenverbindung aufbauen und direkt nach Empfang des ausgegeben digitalen Quittungscodes das Erzeugungsverfahren durchführen.

Grundsätzlich ist jedoch auch ein Zeitversatz möglich. So kann das Mobilgerät nach dem Empfang des ausgegebenen Quittungscodes diesen temporär speichern und zu einem späteren Zeitpunkt, beispielsweise dann, wenn ein verbesserter und/oder stabilierer Zugang über ein Kommunikationsnetzwerk gegeben ist, das Erzeugungsverfahren durchführen. Der erfindungsgemäße Kerngedanke des Erzeugungsverfahrens liegt nun in der Auslagerung des Erzeugungsalgorithmus in das Datennetzwerk und dort in den Server. Der Server kann in der Lage sein, auch rechenintensive Erzeugungsalgorithmen durchzuführen, zum Beispiel das Umsetzen der Quittungsinformationen nicht nur in die Informationen, welcher in der digitalen Quittung enthalten sein müssen, sondern auch in der Durchführung eines Renderings, beispielsweise zum Erstellen eines für den Verkäufer personalisierten PDF-Dokuments als digitale Quittung. Bei diesem Erzeugungsalgorithmus können auch aufwendige Rechenverfahren, beispielsweise das Einbinden von Logos, das Einbinden von Fotos für das Produkt oder Ähnliches durchgeführt werden. Da der Server die entsprechenden Rechenkapazitäten aufweist, stellt dies keine Einschränkung des Verkaufsvorgangs dar, da dieses sowohl örtlich als auch zeitlich von dem Verkaufsvorgang und damit von der Verkaufsvorrichtung selbst komplett getrennt worden ist. Auch ist hier gut zu erkennen, dass diese Serverintegration erst auf Seiten des Mobilgeräts erfolgt, welches bereits grundsätzlich über ein oder mehrere Kommunikationsnetzwerke mit dem Datennetzwerk in Verbindung stehen kann. Dies erlaubt es, diese Netzwerkverbindung über das Mobilgerät zur Verfügung zu stellen und entsprechend die Verkaufsvorrichtung für das Erstellungsverfahren frei von jeder Netzwerkanbindung und damit offline zu halten.

Erfindungsgemäß wird nun im Erzeugungsverfahren die Adressinformation und damit der Adresscode des digitalen Quittungscodes verwendet, um die Datenverbindung spezifisch zu dem gewünschten Server aufzubauen, welcher in der Lage ist, mit dem Erzeugungsalgorithmus auch tatsächlich die digitale Quittung zu erzeugen. Der Adresscode dient also der Wegbeschreibung und damit der Zieldefinition, zu welchem Ziel und zu welcher Adresse das Mobilgerät die Datenverbindung aufbauen soll. Anschließend, also nach Aufbau dieser gezielten Datenverbindung, erfolgt das Übermitteln des Informationscodes und das Erzeugen der digitalen Quittung an den auf diese Weise gezielt ausgewählten Server. Die Datenverbindung wird vorzugsweise solange aufrechterhalten, bis der Erzeugungsalgorithmus seine Arbeit beendet hat und entsprechend die digitale Quittung wieder an das Mobilgerät zurückgesendet ist. Dabei kann es sich insbesondere um für den Menschen lesbare PDF-Dokumente handeln. Jedoch ist es grundsätzlich auch möglich, andere Datenformate zu generieren, wie dies später noch bei den Beispielen für die digitale Quittung näher erläutert wird.

Das Erzeugungsverfahren kann dabei insbesondere frei von einer spezifischen Applikation auf diesem Mobilgerät ausgeführt werden. So reicht es aus, wenn das Erzeugungsverfahren in dem Adresscode einen Linkaufruf nutzt, welcher beispielsweise in einer Browseranwendung des Mobilgerätes aufgerufen werden kann. So ist es möglich, dass ohne eine spezifische Anwendung, jedes Mobilgerät in der Lage ist, aus dem digitalen Quittungscode die entsprechende Datenverbindung aufzubauen und damit die digitale Quittung extern auf dem Server erzeugen zu lassen und zu erhalten. Diese digitale Quittung kann dann entsprechend temporär oder für länger auf dem Mobilgerät des Käufers gespeichert oder auch weiterverarbeitet werden werden.

Es kann von Vorteil sein, wenn bei einem erfindungsgemäßen Erzeugungsverfahren die digitale Quittung wenigstens eines der folgenden Formate aufweist:
- Textdaten, insbesondere im PDF-Format,
- Steuerformatdatei.

Bei der voranstehenden Aufzählung handelt es sich um eine nicht abschließende Liste. Je nachdem, welche tatsächliche spätere Nutzung der Käufer mit der digitalen Quittung durchführen möchte, können unterschiedliche Formate sinnvoll sein. Am häufigsten wird voraussichtlich eine Bilddatei, eine Textdatei oder ein PDF-Format gewählt, um entsprechend den aktuellen internationalen Standards die digitale Quittung zu erzeugen und dem Käufer zur Verfügung zu stellen. Selbstverständlich ist es grundsätzlich auch möglich, mehrere Formate auszuwählen, sodass entsprechend die digitale Quittung in unterschiedlichen Formaten erzeugt und dem Käufer zur Verfügung gestellt wird. Diese können aktiv über den Datenverbindung an das Mobilgerät übermittelt oder dem Käufer zum ausgewählten Download zur Verfügung gestellt werden.

Ebenfalls von Vorteil ist es, wenn bei dem erfindungsgemäßen Erzeugungsverfahren vor dem Erzeugen der digitalen Quittung ein gewünschtes Format für die digitale Quittung vom Käufer erfasst wird und der Erzeugungsalgorithmus entsprechend angepasst wird. So kann es Vorteile mit sich bringen, wenn der Käufer bei der Nutzung des Mobilgerätes eine Eingabe durchführt oder eine Abfrage seitens des Severs über die Datenverbindung beantwortet, in welcher Form er die Durchführung des Erzeugungsalgorithmus wünscht. Dies erlaubt es, noch flexibler und spezifischer die entsprechende Durchführung des Erzeugungsalgorithmus zu gewährleisten. Dabei kann zusätzlich zur Auswahl des Formats auch eine zusätzliche Information vom Käufer über das Mobilgerät eingegeben werden, sodass beispielsweise beim Erzeugen von Restaurantquittungen der Käufer noch weitere Informationen, beispielsweise zu den anderen Gästen oder bei Hotelrechnungen die gewünschte Rechnungsadresse, hinzufügen kann. Der Erzeugungsalgorithmus wird nun nicht nur spezifisch auf Basis des erstellten digitalen Quittungscodes, sondern auch spezifisch auf Basis der zusätzlichen, vom Käufer zur Verfügung gestellten Informationen den Erzeugungsalgorithmus durchführen.

Ein weiterer Vorteil ist es darüber hinaus, wenn bei einem erfindungsgemäßen Erzeugungsverfahren vor dem Erzeugen der digitalen Quittung der Informationscode entschlüsselt wird, wobei für die Übermittlung zu dem Mobilgerät die erzeugte digitale Quittung insbesondere wieder verschlüsselt wird. Dies erlaubt es, in beiden Richtungen in verschlüsselter Weise zu übermitteln. Insbesondere ist es jedoch vorteilhaft die verschlüsselte Kommunikation, insbesondere die verschlüsselte Ausbildung der Payload in Form des Informationscodes im Quittungscode so verschlüsselt zu gestalten, dass sie manipulationssicher und damit revisionsfest in dem Quittungscode integriert ist. Der Entschlüsselungsschlüssel kann dabei Teil des Quittungscodes sein als sogenannter "Public-Key". Bevorzugt ist für die ausgebildete Sicherheit sogar die genannte bidirektionale Verschlüsselung, also für den Upload und den Download in der Kommunikation zwischen dem Mobilgerät einerseits und dem Server andererseits.

Ein weiterer Vorteil kann es ebenfalls sein, wenn bei einem erfindungsgemäßen Erzeugungsverfahren der Quittungscode eine Anweisung aufweist, welche dem Mobilgerät die Schritte der Ausbildung der Datenverbindung und/oder der Übermittlung des Informationscodes anweist. Darunter kann zum Beispiel das Öffnen der zuständigen Browserapplikation auf dem Mobilgerät enthalten sein. Dabei ist insbesondere keine eigene spezifische Quittungsapplikation auf dem Mobilgerät notwendig . Auch wird es auf diese Weise möglich, automatisch durch das Aufnehmen des ausgegebenen Quittungscodes das Erzeugungsverfahren auf dem Mobilgerät zeitlich direkt korrelierend zu starten und damit den Käufer auf die Möglichkeit der Ausgabe der digitalen Quittung nicht nur hinzuweisen, sondern diese sogar im Wesentlichen automatisch durchzuführen.

Weitere von Vorteil ist es darüber hinaus, wenn bei einem erfindungsgemäßen Erzeugungsverfahren der Erzeugungsalgorithmus der digitalen Quittung den digitalen Quittungscode wieder hinzufügt. Darunter ist zu verstehen, dass der ursprüngliche Code, welcher die Basis für die digitale Quittung ist, wieder auf der digitalen Quittung aufgeführt ist. Insbesondere wird es auf diese Weise möglich, nachträgliche Manipulationen, beispielsweise auf dem PDF-Dokument, zu erkennen, da der weiter beinhaltete Quittungscode in beliebiger Weise und beliebig häufig auch nochmals zum Erzeugen der digitalen Quittung verwendet werden kann. Wird nun bei einer Prüfung der digitalen Quittung der Quittungscode nochmals im Erzeugungsverfahren angewendet, so kann durch Vergleich der neu-erzeugten digitalen Quittung mit der vorhandenen digitalen Quittung ein möglicher Unterschied auf eine Manipulation der digitalen Quittung durch den Käufer hinweisen.

Ebenfalls Gegenstand der vorliegenden Erfindung ist ein Computerprogrammprodukt, aufweisend Befehle, welche bei der Ausführung durch einen Computer diesen veranlassen die Schritte eines erfindungsgemäßen Erzeugungsverfahrens und/oder eines erfindungsgemäßen Erstellungsverfahrens auszuführen. Damit bringt ein erfindungsgemäßes Computerprogrammprodukt die gleichen Vorteile mit sich, wie sie ausführlich mit Bezug auf ein erfindungsgemäßes Erstellungsverfahren und mit Bezug auf ein erfindungsgemäßes Erzeugungsverfahren erläutert worden sind.

Ein weiterer Gegenstand der vorliegenden Erfindung ist eine Verkaufsvorrichtung für einen Verkaufsvorgang zwischen einem Verkäufer und einem Käufer mit einem Mobilgerät, aufweisend ein Erfassungsmodul für ein Erfassen von wenigstens einer Verkaufsinformation des Verkaufsvorgangs, ein Erzeugungsmodul für ein Erzeugen wenigstens einer Quittungsinformation auf Basis der erfassten wenigstens einen Verkaufsinformation sowie ein Erzeugen eines digitalen Quittungscodes. Dieser Quittungscode weist einen Informationscode mit der wenigstens einen Quittungsinformation und einen Adresscode mit einem Adresslink zum Aufrufen einer Netzadresse in einem Datennetzwerk auf. Weiter ist in der Verkaufsvorrichtung ein Ausgabemodul vorgesehen für ein Ausgeben des erzeugten digitalen Quittungscodes an das Mobilgerät des Käufers. Das Erfassungsmodul, das Erzeugungsmodul und/oder das Ausgabemodul sind dabei ausgebildet für eine Ausführung eines erfindungsgemäßen Erstellungsverfahren. Damit bringt eine erfindungsgemäße Verkaufsvorrichtung die gleichen Vorteile mit sich, wie sie ausführlich mit Bezug auf ein erfindungsgemäßes Erstellungsverfahren erläutert worden sind.

Ebenfalls Gegenstand der vorliegenden Erfindung ist ein Erzeugungssystem für ein Erzeugen einer digitalen Quittung aus einem digitalen Quittungscode, welcher insbesondere mittels eines erfindungsgemäßen Erstellungsverfahren erstellt worden ist. Das Erzeugungssystem dient einem Nachgang eines Verkaufsvorgangs zwischen einem Verkäufer mit einer Verkaufsvorrichtung und einem Käufer mit einem Mobilgerät. Dafür weist das Erzeugungssystem einen Server auf für ein Ausbilden einer Datenverbindung zwischen dem Mobilgerät und dem Server in einem Datennetzwerk. Dieses erfolgt über ein Kommunikationsnetzwerk, mit welchem das Mobilgerät verbunden ist unter Nutzung des Adresscodes des digitalen Quittungscodes. Der Server weist ein Übermittlungsmodul für ein Empfangen des Informationscodes des digitalen Quittungscodes über die ausgebildete Datenverbindung auf. Weiter werden folgende Schritte im Server ausgeführt:
- Erzeugen einer digitalen Quittung mittels eines Erzeugungsalgorithmus auf dem Server auf Basis der Quittungsinformationen des Quittungscodes,
- Übermitteln der erzeugten digitalen Quittung vom Server zu dem Mobilgerät über die ausgebildete Datenverbindung.

Ein erfindungsgemäßes Erzeugungssystem bringt die gleichen Vorteile mit sich, wie sie ausführlich mit Bezug auf ein erfindungsgemäßes Erzeugungsverfahren erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen schematisch:
- Fig. 1: eine erfindungsgemäße Verkaufsvorrichtung bei der Durchführung eines erfindungsgemäßen Erstellungsverfahrens,
- Fig. 2: ein erfindungsgemäßes Erzeugungssystem bei der Durchführung eines erfindungsgemäßen Erzeugungsverfahrens,
- Fig. 3: die Kombination von Erstellungsverfahren und Erzeugungsverfahren,
- Fig. 4: das Erzeugungsverfahren in weiteren Details,
- Fig. 5: ein möglicher Aufbau eines Quittungscodes,
- Fig. 6: ein weiterer möglicher Aufbau eines Quittungscodes,
- Fig. 7: eine Variante einer erfindungsgemäßen Verkaufsvorrichtung,
- Fig. 8: ein erster Schritt eines erfindungsgemäßen Erzeugungsverfahrens,
- Fig. 9: ein weiterer Schritt eines erfindungsgemäßen Erzeugungsverfahrens,
- Fig. 10: eine weitere Variante eines erfindungsgemäßen Erzeugungsverfahrens.

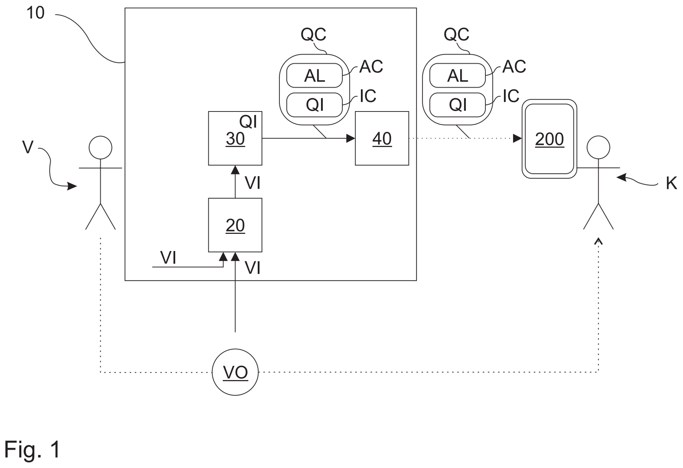

Die Figur 1 zeigt schematisch eine Verkaufsvorrichtung 10, welche einen Verkaufsvorgang durchführen und dabei ein Erstellungsverfahren gemäß der vorliegenden Erfindung ablaufen lassen kann. Dies kann beispielsweise rein softwaregebunden auf einem Computer oder einem Tablet des Verkäufers V als Verkaufsvorrichtung 10 durchgeführt werden. Auch klassische Registrierkassensysteme sind hier als Verkaufsvorrichtungen 10 grundsätzlich verwendbar. Je nach Verkaufsvorgang können auch Automaten als Verkaufsvorrichtungen 10, zum Beispiel sogar Geldautomaten, welche als Verkaufsobjekt VO Geld ausgeben, eingesetzt werden.

Die Verkaufsvorrichtung 10 ist mit einem Erfassungsmodul 20 ausgebildet, welches in der Lage ist, Verkaufsinformationen VI zu erfassen. Diese Verkaufsinformationen VI können vom Verkaufsobjekt VO erfasst werden, sodass beispielsweise über Barcodes die Produktart oder auch der Produktpreis explizit bestimmt werden kann. Auch eine innerhalb der Verkaufsvorrichtung 10 angeordnete Erfassung von Verkaufsinformationen VI ist denkbar, sodass beispielsweise ein Zeitstempel, ein Datumsstempel, eine Ortsinformation oder Ähnliches als interne Verkaufsinformation VI innerhalb der Verkaufsvorrichtung 10 zur Verfügung gestellt und vom Erfassungsmodul 20 erfasst werden kann. Diese erfassten Verkaufsinformationen VI werden nun weitergegeben an das Erzeugungsmodul 30, welches auf Basis der Verkaufsinformationen VI Quittungsinformationen QI erzeugt und diese nutzt, um anschließend einen Quittungscode QC zu erzeugen.

Dieser Quittungscode QC weist zwei Hauptbestandteile auf. Diese sind bei der Ausgabe aus dem Erzeugungsmodul 30 zum einen der Informationscode IC und zum anderen der Adresscode AC. Der Adresscode AC als Bestandteil des Quittungscode QC weist dabei einen Adresslink AL auf und der Informationscode IC wenigstens eine Quittungsinformation QI. Über das Ausgabemodul 40 erfolgt nun ein Ausgeben an ein Mobilgerät 200 des Käufers K.

Die Figur 1 zeigt also schematisch den Verkaufsvorgang für das Verkaufsobjekt VO bei der Übergabe vom Verkäufer V an den Käufer K. Während ursprünglich nun eine manuell erzeugte oder automatisch erzeugte Quittung ausgedruckt und übergeben wurde, wird erfindungsgemäß nun ein Quittungscode QC erstellt, welcher die beiden Hauptbestandteile in Form des Adresscodes AC und des Informationscodes IC enthält. Die Ausgabe an das Mobilgerät 200, beispielsweise das Mobiltelefon des Käufers K, kann über das Ausgabemodul 20 in ebenfalls digitaler Weise erfolgen. Dies kann ein Ausgeben mit Hilfe einer Schnittstelle, beispielsweise einer Bluetooth-Schnittstelle, einer NFC-Schnittstelle oder Ähnliches sein. Auch ist es möglich, die Ausgabe in visueller Weise durchzuführen, sodass beispielsweise das Abscannen eines auf dem Ausgabemodul 40 dargestellten QR-Codes mit der Kameravorrichtung des Mobilgeräts 200 erfolgt. Dies wird später noch näher mit Bezug auf diese QR-Code-Ausbildung des Quittungscode QC erläutert.

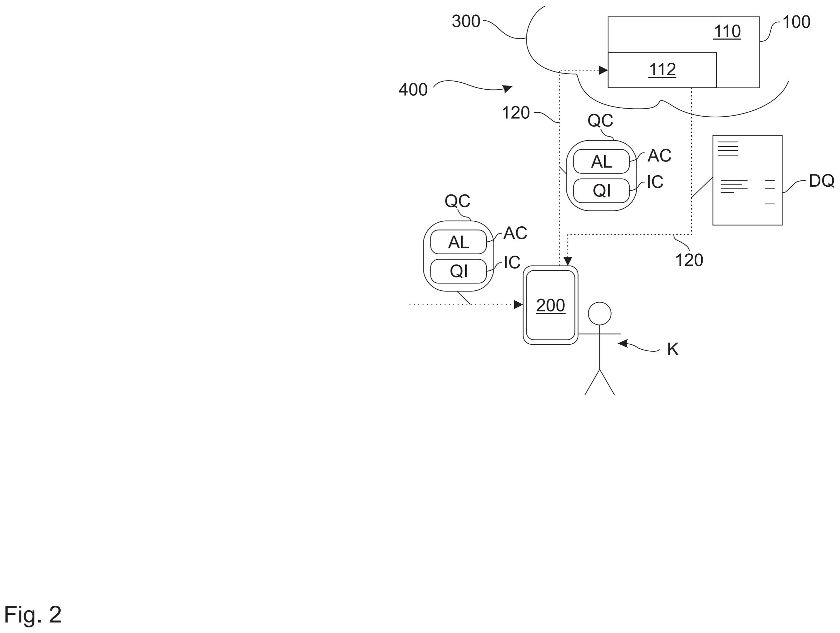

Sobald nun der Käufer K nicht nur das Verkaufsobjekt VO in Empfang genommen hat, sondern sein Mobilgerät 200 auch den ausgegebenen Quittungscode QC gespeichert hat, kann er direkt zeitlich anschließend oder zu einem späteren Zeitpunkt ein erfindungsgemäßes Erzeugungsverfahren durchführen. Das Erzeugungsverfahren ist in der Figur 2 näher dargestellt. Dieses wird in einem Erzeugungssystem 100 durchgeführt, welches hier cloudbasiert ausgeführt ist. Sobald der Käufer K nun über sein Mobilgerät 200 im Besitz des Quittungscodes QC ist, kann er diesen verwenden, um über ein Kommunikationsnetzwerk 400, beispielsweise ein Mobilfunknetz, eine Datenverbindung 120 zu einem Datennetzwerk 300 aufzubauen. Dieses Datennetzwerk 300 kann auch als Cloudnetzwerk bezeichnet werden, in welchem der Server 110 des Erzeugungssystems 100 angeordnet ist. Diese Datenverbindung 120 ist insbesondere eine drahtlose Datenverbindung und kann beispielsweise dazu genutzt werden nun den Quittungscode QC, insbesondere zumindest die Quittungsinformation QI des Informationscodes IC an den Server 110 zu übermitteln. Für den Empfang ist der Server 110 mit einem entsprechenden Übermittlungsmodul 112 ausgestattet. Hier wird nun, in Figur 2 noch nicht näher dargestellt, innerhalb des Servers 110 die digitale Quittung DQ erstellt und beispielsweise im PDF-Format, wie hier schematisch als Textdatei dargestellt, über die Datenverbindung 120 zurückübermittelt. Dies kann dieselbe Datenverbindung 120 sein, welche bereits aufgebaut worden ist oder aber separat von dieser ausgebildet sein.

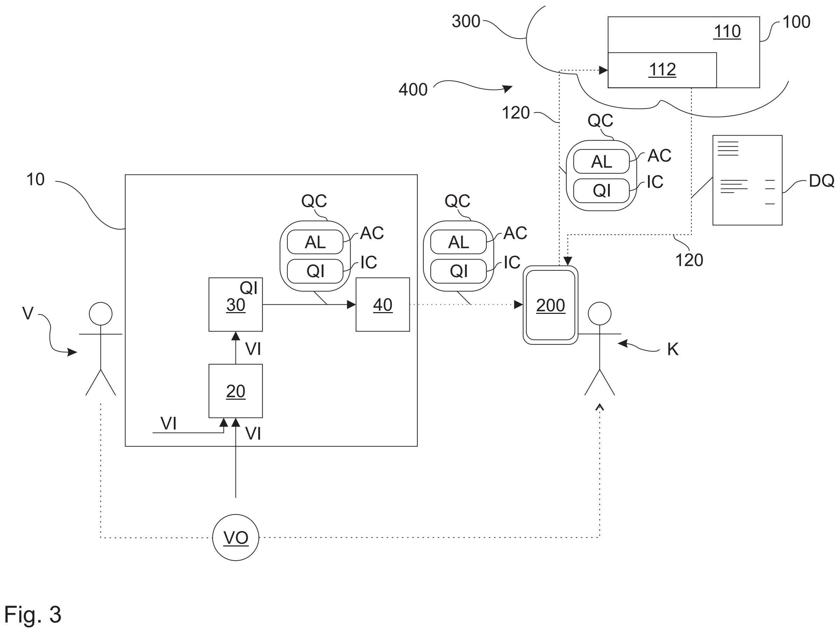

Die Figur 3 zeigt, dass ein zeitlicher Zusammenhang zwischen diesen beiden Schritten, also dem Erstellungsverfahren und dem Erzeugungsverfahren, bestehen kann. So kann direkt im zeitlichen Anschluss an die Erstellung des Quittungscodes QC und der Ausgabe dieses Quittungscodes QC das Mobilgerät 200 das Erzeugungsverfahren durchführen, sodass im Wesentlichen mit keiner oder wenig zeitlicher Verzögerung nicht nur der Quittungscode QC von der Verkaufsvorrichtung 10 an das Mobilgerät 200 übergeben, sondern aus dem Mobilgerät 200 heraus auch das Erzeugungsverfahren durchgeführt werden kann. Somit erhält der Käufer K in indirekter Weise in kurzem Anschluss an den Verkaufsvorgang auch die gewünschte digitale Quittung DQ aus dem Datennetzwerk 300.

Wie die Figuren 1 und 3 gut zeigen, kann nun die cloudbasierte Lösung für die Erstellung der digitalen Quittung DQ in der vorteilhaften Weise erfolgen, sodass die Komplexität und der Rechenaufwand aus der Verkaufsvorrichtung 10 in das Datennetzwerk 300 auf den rechenstarken Server 110 ausgelagert werden kann. Gleichzeitig ist diese Auslagerung jedoch in einer Weise geschehen, dass keine Netzwerkverbindung ausgehend von der Verkaufsvorrichtung 10 zu dem Datennetzwerk 300 notwendig ist. Vielmehr bedient sich die Kombination aus Erstellungsverfahren und Erzeugungssystem nun der Kombination aus lokaler Erstellung und als Übergabepaket dem digitalen Quittungscode QC. Die bereits bestehende und hinsichtlich der Sicherheit unbedenkliche Datenkommunikation ausgehend vom Mobilgerät 200 wird nun genutzt, um in der serverbasierten Erzeugung die digitale Quittung DQ auf diesem Server 110 zu erzeugen.

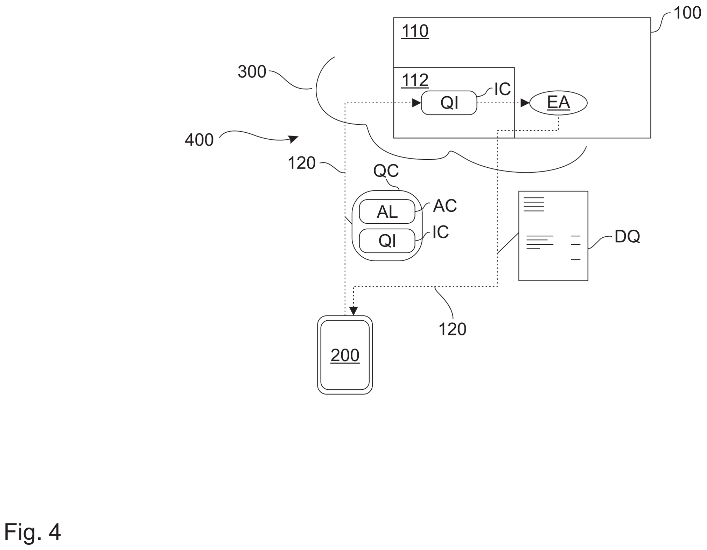

In der Figur 4 sind die Schritte des Erzeugungsverfahrens im Erzeugungssystem 100 nochmals näher dargestellt. So wird im Übermittlungsmodul 112 insbesondere die Quittungsinformation QI des Informationscodes IC empfangen und ausgelesen und an den Erzeugungsalgorithmus EA weitergegeben. Dieser kann Teil des Übermittlungsmoduls 112 oder separat von diesem im Server 110 ausgebildet sein. Über das gleiche, oder auch über ein anderes Übermittlungsmodul 112 ist es nun möglich, die durch den Erzeugungsalgorithmus EA erzeugte digitale Quittung DQ auszugeben und über dieselbe oder eine andere Datenverbindung 120 nun die erzeugte digitale Quittung DQ wieder an das Mobilgerät 200 zurück zu übermitteln.

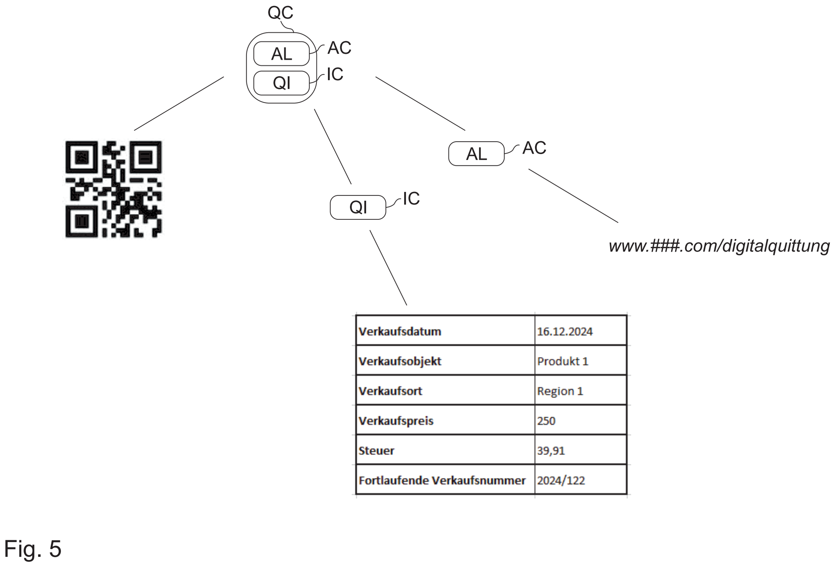

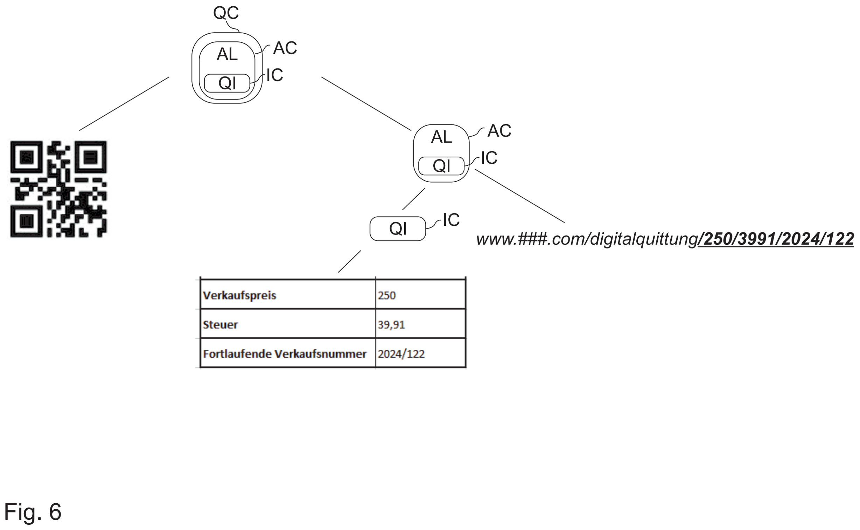

Die Figuren 5 und 6 zeigen zwei verschiedene Beispiele, wie ein solcher digitaler Quittungscode QC ausgestaltet sein kann. In beiden Fällen handelt es sich um einen visuellen abscannbaren QR-Code, welcher auch als zweidimensionaler QR-Code bezeichnet werden kann. Dieser ist in der Figur 5 mit zwei Hauptbestandteilen ausgestattet, nämlich mit parallel einerseits dem Adresscode AC und andererseits dem Informationscode IC. Der Adresscode AC weist einen Adresslink AL auf, welcher zum Beispiel die hier schematisch dargestellte Internetadresse sein kann, um eine direkte spezifische Zuordnung und ein Aufrufen dieser Internetadresse in einer Browseranwendung auf dem Mobilgerät 200 durchführen zu können. Parallel dazu ist im Quittungscode QC der Informationscode IC gespeichert, welcher hier insgesamt sechs verschiedene Quittungsinformationen QI aufweist. Hierbei handelt es sich rein beispielsweise um das Verkaufsdatum, das Verkaufsobjekt, den Verkaufsort, den Verkaufspreis, die anwendbare Steuer und eine fortlaufende Verkaufsnummer. Selbstverständlich sind auch mehr oder weniger Quittungsinformationen QI grundsätzlich verwendbar. Diese Quittungsinformation QI kann nun nach dem Aufbau einer Datenverbindung 120 zu dem dargestellten Adresslink AL aus dem Adresscode AC anschließend an den Server 110 übermittelt werden.

In der Figur 6 ist eine Variante dargestellt, bei welcher der Informationscode IC in dem Adresscode AC enthalten ist. Insbesondere dann, wenn weniger und vor allem datenarme Quittungsinformationen QI übermittelt werden sollen, können diese als "Payload" in den Adresslink AL integriert werden. Dieses Beispiel ist hier mit Bezug auf den Verkaufspreis, die Steuer und die fortlaufende Verkaufsnummer schematisch dargestellt. Mit anderen Worten wird nun beim Aufrufen des Adresslinks AL ein Teil dieses Adresslinks AL spezifisch bereits die Quittungsinformationen QI enthalten, sodass das Aufrufen des Servers 110 und das Übermitteln des Informationscodes IC in einem Schritt erfolgen kann.

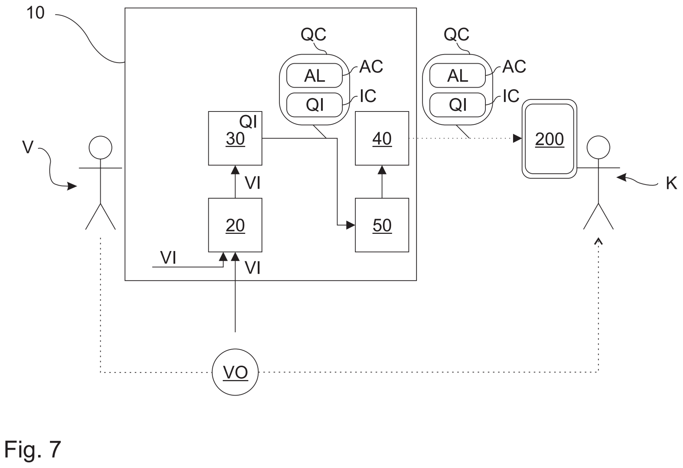

In der Figur 7 ist eine weitere Verbesserung der Sicherheit dargestellt. Hier ist die Verkaufsvorrichtung 10 nun zusätzlich mit einer Speichervorrichtung 50 ausgestattet. Der erzeugte Quittungscode QC wird nun nicht mehr direkt ausgegeben, sondern zuerst von dem Erzeugungsmodul 30 eine Speichervorrichtung 50 zum Speichern übergeben. Erst nach dem Speichern wird durch Auslesen aus der Speichervorrichtung 50 nun der Quittungscode QC über das Ausgabemodul 40 dem Mobilgerät 200 zur Verfügung gestellt. Dies erlaubt es, mögliche Manipulationen am Mobilgerät 200 am Quittungscode QC nachzuvollziehen, da diese zu einem Unterschied zwischen dem dann manipulierten Quittungscode QC und dem vorab bereits in der Speichervorrichtung 50 gespeicherten Quittungsode QC erkennbar werden würden.

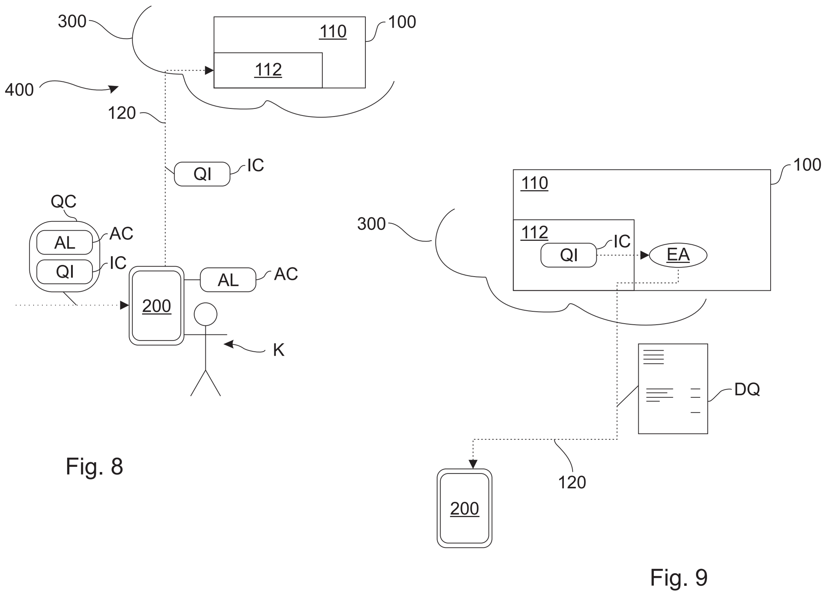

Die Figuren 8 und 9 zeigen nochmals die einzelnen Schritte, sodass in einem ersten Schritt der Adresslink AL aus dem Adresscode AC für den Aufbau der Datenverbindung 120 verwendet wird. Sobald die Datenverbindung 120 steht, erfolgt das Übermitteln des Informationscode IC, wobei durch das Auslesen der Quittungsinformation QI in der Servervorrichtung 110 gemäß Figur 9 nun der Erzeugungsalgorithmus EA die digitale Quittung DQ erzeugen und über die Datenverbindung 120 zurück an das Mobilgerät 200 schicken kann.

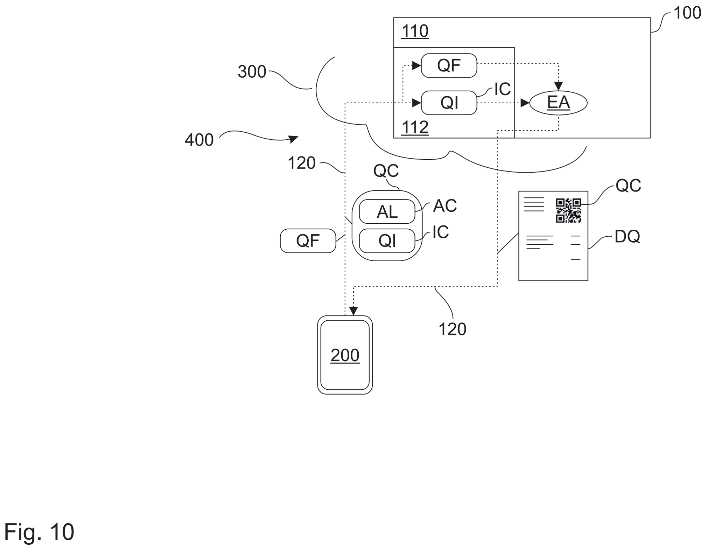

Die Figur 10 zeigt noch eine Variante, bei welcher zusätzlich noch ein Quittungsformat QF vom Mobilgerät 200 mitübermittelt werden kann. Dieses Quittungsformat QF kann auch zusätzliche Informationen, wie beispielweise eine gewünschte Rechnungsadresse, Teilnehmer an einem Abendessen oder Ähnliches, enthalten, sodass der Käufer K zusätzlich zu den zur Verfügung gestellten Quittungsinformationen QI noch eigene Informationen der auszugebenden digitalen Quittung DQ hinzufügen kann. Zusätzlich ist hier noch dargestellt, dass der digitalen Quittung DQ der Quittungscode QC wieder hinzugefügt wird und zwar derjenige Quittungscode QC, der ursprünglich von dem Ausgabemodul 40 ausgegeben worden ist. Führt nun ein Nutzer an der digitalen Quittung DQ eine Manipulation durch, so kann bei einer Überprüfung dieser digitalen Quittung DQ das Erzeugungsverfahren nochmals durchgeführt werden und würde dann zu einer entsprechend unmanipulierten digitalen Quittung DQ führen, sodass der durchgeführte Manipulationsversuch an der digitalen Quittung DQ visuell durch den Unterschied zu der neu erzeugten digitalen Quittung DQ erkennbar werden würde.

Die voranstehende Erläuterung der Ausführungsformen beschreibt die vorliegende Erfindung ausschließlich im Rahmen von Beispielen.

### Bezugszeichenliste

- 10: Verkaufsvorrichtung
- 20: Erfassungsmodul
- 30: Erzeugungsmodul
- 40: Ausgabemodul
- 50: Speichervorrichtung

- 100: Erzeugungssystem
- 110: Server
- 112: Übermittlungsmodul
- 120: Datenverbindung

- 200: Mobilgerät
- 300: Datennetzwerk
- 400: Kommunikationsnetzwerk

- V: Verkäufer
- K: Käufer
- VI: Verkaufsinformation
- VO: Verkaufsobjekt
- DQ: Digitale Quittung
- QI: Quittungsinformation
- QC: Quittungscode
- QF: Quittungsformat
- IC: Informationscode
- AC: Adresscode
- AL: Adresslink
- NA: Netzadresse
- EA: Erzeugungsalgorithmus

## Patentansprüche

1. Erstellungsverfahren für ein Erstellen eines digitalen Quittungscodes (QC) für einen Verkaufsvorgang zwischen einem Verkäufer (V) mit einer Verkaufsvorrichtung (10) und einem Käufer (K) mit einem Mobilgerät (200), aufweisend die folgenden Schritte:
- Erfassen von wenigstens einer Verkaufsinformation (VI) des Verkaufsvorgangs,
- Erzeugen wenigstens einer Quittungsinformation (Ql) auf Basis der erfassten wenigstens einen Verkaufsinformation (VI),
- Erzeugen eines digitalen Quittungscodes (QC), aufweisend einen Informationscode (IC) mit der wenigstens einen Quittungsinformation (QI) und einen Adresscode (AC) mit einem Adresslink (AL) zum Aufrufen einer Netzadresse (NA) in einem Datennetzwerk (300),
- Ausgeben des erzeugten digitalen Quittungscodes (QC) an das Mobilgerät (200) des Käufers (K).

2. Erstellungsverfahren nach Anspruch 1, **dadurch gekennzeichnet, dass** als Verkaufsinformation (VI) wenigstens eine der folgenden erfasst wird:
- Kaufpreis
- Steuer
- Verkaufsort
- Verkaufszeit
- Verkaufsdatum
- Käuferidentifikation
- Zahlungsinformation
- Verkäuferidentifikation
- Nummerierung des Verkaufsvorgangs

3. Erstellungsverfahren nach einem der vorangegangenen Ansprüche, **dadurch gekennzeichnet, dass** der digitale Quittungscode (QC) wenigstens eine der folgenden Formen aufweist:
- Visueller Code, insbesondere QR Code
- digitale Codeinformation

4. Erstellungsverfahren nach einem der vorangegangenen Ansprüche, **dadurch gekennzeichnet, dass** der Adresscode (AC) des digitalen Quittungscodes (QC) den Informationscode (IC) enthält.

5. Erstellungsverfahren nach einem der vorangegangenen Ansprüche, **dadurch gekennzeichnet, dass** der erzeugte Quittungscode (QC) lokal in einer Speichervorrichtung (50) der Verkaufsvorrichtung (10) gespeichert wird, wobei das Speichern insbesondere zeitlich vor der Ausgabe an das Mobilgerät (200) erfolgt.

6. Erstellungsverfahren nach Anspruch 5, **dadurch gekennzeichnet, dass** die Ausgabe des erzeugten digitalen Quittungscodes (QC) nach dem Speichern durch Auslesen aus der Speichervorrichtung (50) erfolgt.

7. Erstellungsverfahren nach einem der vorangegangenen Ansprüche, **dadurch gekennzeichnet, dass** der Informationscode (IC) die Quittungsinformation (QC) in einer verschlüsselten Form aufweist.

8. Erzeugungsverfahren für ein Erzeugen einer digitalen Quittung (DQ) aus einem digitalen Quittungscode (QC), welcher insbesondere mittels eines Erstellungsverfahrens mit den Merkmalen eines der Ansprüche 1 bis 7 erstellt worden ist, für einen Verkaufsvorgang zwischen einem Verkäufer (V) mit einer Verkaufsvorrichtung (10) und einem Käufer (K) mit einem Mobilgerät (200) aufweisend die folgenden Schritte:
- Erfassen des digitalen Quittungscodes (QD) mit dem Mobilgerät (200) des Käufers (K),
- Ausbilden einer Datenverbindung (120) zwischen dem Mobilgerät (200) und einem Server (110) in einem Datennetzwerk (300) über ein Kommunikationsnetzwerk (400) mit welchem das Mobilgerät (200) verbunden ist, unter Nutzung des Adresscodes (AC) des digitalen Quittungscodes (QC),
- Übermitteln des Informationscodes (IC) des digitalen Quittungscodes (QC) über die ausgebildete Datenverbindung (120),
- Erzeugen der digitalen Quittung (DQ) mittels eines Erzeugungsalgorithmus (EA) auf dem Server (100) auf Basis der Quittungsinformationen (Ql) des Informationscodes (IC),
- Übermitteln der erzeugten digitalen Quittung (DQ) vom Server (110) zu dem Mobilgerät (200) über die ausgebildete Datenverbindung (120).

9. Erzeugungsverfahren nach Anspruch 8, **dadurch gekennzeichnet, dass** die digitale Quittung (DQ) wenigstens eines der folgenden Formate aufweist:
- Textdaten, insbesondere im PDF-Format
- Steuerformatdatei

10. Erzeugungsverfahren nach einem der Ansprüche 8 oder 9, **dadurch gekennzeichnet, dass** vor dem Erzeugen der digitalen Quittung (DQ) ein gewünschtes Format für die digitale Quittung (DQ) vom Käufer (K) erfasst und der Erzeugungsalgorithmus (EA) entsprechend angepasst wird.

11. Erzeugungsverfahren nach einem der Ansprüche 8 bis 10, **dadurch gekennzeichnet, dass** vor dem Erzeugen der digitalen Quittung (DQ) der Informationscode (IC) entschlüsselt wird, wobei für die Übermittlung zu dem Mobilgerät (200) die erzeugte digitale Quittung (DQ) insbesondere wieder verschlüsselt wird.

12. Erzeugungsverfahren nach einem der Ansprüche 8 bis 11, **dadurch gekennzeichnet, dass** der Quittungscode (QD) eine Anweisung aufweist, welche dem Mobilgerät (200) die Schritte der Ausbildung der Datenverbindung (120) und der Übermittlung des Informationscodes (IC) anweist.

13. Erzeugungsverfahren nach einem der Ansprüche 8 bis 12, **dadurch gekennzeichnet, dass** der Erzeugungsalgorithmus (EA) der digitalen Quittung (DQ) den digitalen Quittungscode (QC) wieder hinzufügt.

14. Computerprogrammprodukt, aufweisend Befehle, welche bei der Ausführung durch einen Computer diesen veranlassen die Schritte eines Erstellungsverfahrens mit den Merkmalen eines der Ansprüche 1 bis 7 und/oder Erzeugungsverfahrens eines mit den Merkmalen eines der Ansprüche 8 bis 13 auszuführen.

15. Verkaufsvorrichtung (10) für einen Verkaufsvorgang zwischen einem Verkäufer (V) und einem Käufer (K) mit einem Mobilgerät (200), aufweisend ein Erfassungsmodul (20) für ein Erfassen von wenigstens einer Verkaufsinformation (VI) des Verkaufsvorgangs, ein Erzeugungsmodul (30) für ein Erzeugen wenigstens einer Quittungsinformation (QI) auf Basis der erfassten wenigstens einen Verkaufsinformation (VI) und ein Erzeugen eines digitalen Quittungscodes (QC), aufweisend einen Informationscode (IC) mit der wenigstens einen Quittungsinformation (QI) und einen Adresscode (AC) mit einem Adresslink (AL) zum Aufrufen einer Netzadresse (NA) in einem Datennetzwerk (300) und ein Ausgabemodul (40) für ein Ausgeben des erzeugten digitalen Quittungscodes (QC) an das Mobilgerät (200) des Käufers (K), wobei das Erfassungsmodul (20), das Erzeugungsmodul (30) und/oder das Ausgabemodul (40) ausgebildet sind für eine Ausführung eines Erstellungsverfahrens mit den Merkmalen eines der Ansprüche 1 bis 7.

16. Erzeugungssystem (100) für ein Erzeugen einer digitalen Quittung (DQ) aus einem digitalen Quittungscode (QC), welcher insbesondere mittels eines Erstellungsverfahrens mit den Merkmalen eines der Ansprüche 1 bis 7 erstellt worden ist, für einen Verkaufsvorgang zwischen einem Verkäufer (V) mit einer Verkaufsvorrichtung (10) und einem Käufer (K) mit einem Mobilgerät (200) aufweisend einen Server (110) für ein Ausbilden einer Datenverbindung (120) zwischen dem Mobilgerät (200) und dem Server (110) in einem Datennetzwerk (300) über ein Kommunikationsnetzwerk (400) mit welchem das Mobilgerät (200) verbunden ist, unter Nutzung des Adresscodes (AC) des digitalen Quittungscodes (QC), der Server (110) aufweisend ein Übermittlungsmodul (112) für ein Empfangen des Informationscodes (IC) des digitalen Quittungscodes (QC) über die ausgebildete Datenverbindung (120), wobei der Server (110) für die Ausführung der folgenden Schritte ausgebildet ist:
- Erzeugen der digitalen Quittung (DQ) mittels eines Erzeugungsalgorithmus (EA) auf dem Server (100) auf Basis der Quittungsinformationen (Ql) des Informationscodes (IC),
- Übermitteln der erzeugten digitalen Quittung (DQ) vom Server (110) zu dem Mobilgerät (200) über die ausgebildete Datenverbindung (120).
